# EUROPÄISCHE PATENTANMELDUNG

(11) **EP 4 635 283 A1**
(43) Veröffentlichungstag der Anmeldung: **22.10.2025**
(21) Anmeldenummer: 24170146.5
(22) Anmeldetag: 15.04.2024
(51) Int. Cl.: A01D 34/14, A01D 34/16

(54) **MÄHBALKEN**

(71) Anmelder: SMF - Holding GmbH, 57612 Eichelhardt (DE)
(72) Erfinder: HÖLLER, Frank, 57629 Stein-Wingert (DE); SCHELLBERG, Andreas, 53567 Asbach (Westerwald) (DE)
(74) Vertreter: Neumann Müller Oberwalleney Patentanwälte PartG mbB

(57) **Zusammenfassung**

Mähbalken (1) umfassend:
einen Fingerbalken (2),
eine Mähfingeranordnung (3, 4, 5), die einen Befestigungsabschnitt (8) aufweist, mit dem die Mähfingeranordnung (3, 4, 5) am Fingerbalken (2) befestigt ist, wobei im Befestigungsabschnitt (8) ein zu einer Stirnseite (12) des Befestigungsabschnitts (8) offener Befestigungsschlitz (10) ausgebildet ist, und
eine Befestigungsanordnung (6) mit einem Spannbolzen (14), wobei der Spannbolzen (14) durch den Befestigungsschlitz (10) des Befestigungsabschnitts (8) hindurchverläuft und der Befestigungsabschnitt (8) und die Befestigungsanordnung (6) mittels des Spannbolzens (14) am Fingerbalken (2) befestigt ist,
wobei der Befestigungsabschnitt (8) der Mähfingeranordnung (3, 4, 5) und die Befestigungsanordnung (6) Formschlusselemente (49, 50) aufweisen, die miteinander in Eingriff sind.

## Beschreibung

Die Erfindung betrifft einen Mähbalken insbesondere einer landwirtschaftlichen Erntemaschine, wobei der Mähbalken einen Fingerbalken, eine Mähfingeranordnung und eine Befestigungsanordnung mit einem Spannbolzen umfasst. Die Mähfingeranordnung weist einen Befestigungsabschnitt auf, mit dem die Mähfingeranordnung am Fingerbalken befestigt ist, wobei im Befestigungsabschnitt ein zu einer Stirnseite des Befestigungsabschnitts offener Befestigungsschlitz ausgebildet ist. Der Spannbolzen verläuft durch den Befestigungsschlitz des Befestigungsabschnitts hindurch, wobei der Befestigungsabschnitt und die Befestigungsanordnung mittels des Spannbolzens am Fingerbalken befestigt ist.

Mähbalken dieser Art kommen in Fingerbalkenmähwerken von Erntemaschinen zum Einsatz. Die Mähfingeranordnung ist dazu bestimmt, mit einem oszillierend bzw. hin- und hergehend angetriebenen Mähmesser schneidend zusammenzuwirken. Die Mähfingeranordnung führen hierfür das Mähmesser und bilden Gegenschneiden für an dem Mähmesser angeordneten Messerklingen. An dem Fingerbalken sind in der Regel mehrere Mähfingeranordnungen mit einem oder mehreren Mähfingern angeordnet. Die Mähfingeranordnungen können als Gesenkschmiedeteile oder als Gussteile hergestellt sein und umfassen im Wesentlichen ein stabiles Fingerunterteil, das an seinem hinteren Ende am Fingerbalken verschraubt ist, eine spitz auslaufende, nach vorne weisende Fingerspitze und eine Fingerlippe oder ein Mähfingeroberteil, das sich von der Fingerspitze nach hinten erstreckt und mit dem Mähfingerunterteil einen Messerspalt bildet, in welchem das Mähmesser hin- und herbewegt geführt ist. Die seitlichen Flanken des Mähfingers, und zwar sowohl des Mähfingerunterteils als auch des Mähfingeroberteils, bilden dabei im Bereich des Mähmessers die Gegenschneiden für das Mähmesser. Die Mähfingeranordnung kann jedoch auch aus Blechteilen hergestellt sein, wie zum Beispiel aus einem Mähfingerunterteil und einen Mähfingeroberteil, die jeweils aus Blechmaterial hergestellt sind. Das Mähmesser umfasst meist eine Messerschiene, an der mehrere Messerklingen, meist in dreieckiger Grundform, befestig sind. Beim Schnittvorgang wird das Erntegut durch das Hin- und Herbewegen des Mähmessers von den Messerklingen gegen die Mähfinger gedrückt und abgeschnitten.

Für die Montage der Mähfingeranordnungen weisen diese meist einen oder mehrere Befestigungsabschnitte mit Befestigungsbohrungen auf. Der Fingerbalken ist ebenso mit Befestigungsbohrungen versehen, sodass die Mähfingeranordnungen mittels Schrauben am Fingerbalken befestigt werden können. Zur Demontage der Mähfingeranordnungen müssen die Schrauben vollständig aus den Befestigungsbohrungen entfernt werden.

Im Betrieb des Fingerbalkenmähwerks kann es erforderlich sein, einzelne Mähfingeranordnungen oder Messerklingen aufgrund von Verschleiß oder einer Beschädigung auszutauschen. Um hierbei die Ausfallzeiten der Erntemaschine so gering wie möglich zu halten, ist eine schnelle Demontage und Montage einer einzelnen Mähfingeranordnungen, um diese auszutauschen oder die auszutauschende Messerklinge erreichen zu können, wünschenswert.

Hierzu schlägt die US 3 525 203 A eine Mähfingeranordnung der eingangs genannten Art vor, bei der im Befestigungsabschnitt der Mähfingeranordnung ausgehend von einer rückwärtigen Stirnseite ein Befestigungsschlitz ausgebildet ist, der im montierten Zustand der Mähfingeranordnung am Fingerbalken den Spannbolzen aufnimmt. Der Spannbolzen ist eine Schraube, die über eine Mutter am Fingerbalken gesichert ist und dient zum Verspannen des Befestigungsabschnitts am Fingerbalken. Der Befestigungsabschnitt wird hierbei unterhalb des Fingerbalkens befestigt, wobei der Schraubenkopf durch die Schwerkraft unten gehalten wird, sodass der Befestigungsabschnitt mit seinem Befestigungsschlitz auf den Schraubenschaft zwischen Fingerbalken und Schraubenkopf aufgeschoben werden kann. Im Fingerbalken ist eine quer zu einer Montagerichtung verlaufende Nut eingearbeitet, in die ein entsprechend ausgebildeter Steg an der Mähfingeranordnung im montierten Zustand eingreift. Diese Formschlusselemente des Fingerbalkens einerseits und der Mähfingeranordnung andererseits sollen ein unbeabsichtigtes Lösen der Mähfingeranordnung verhindern. Durch Lösen des Spannbolzens kann der Steg der Mähfingeranordnung zunächst aus der Nut entfernt werden und dann die Mähfingeranordnung in einer Demontagerichtung vom Fingerbalken gelöst werden, ohne dass der Spannbolzen entfernt werden müsste. Zur Montage der Mähfingeranordnung kann diese in Richtung des Befestigungsschlitzes auf den Spannbolzen geschoben werden. Hierdurch entfällt das vollständige zeitaufwendige Entfernen von Befestigungsschrauben, wodurch der Wechselvorgang der Mähfingeranordnungen beschleunigt werden kann. Nachteilig wirkt sich jedoch aus, dass für diese Art der Formschlusselemente der Fingerbalken speziell mit einer Nut versehen werden muss und somit kein Nachrüsten bestehender Mähwerke mit Mähfingeranordnungen mit Befestigungsschlitz möglich ist.

Aufgabe der vorliegenden Erfindung ist es, einen Mähbalken bereitzustellen, die eine sicherere und einfache Montage und Demontage der Mähfingeranordnung von bzw. am Fingerbalken gewährleistet und ein Nachrüsten bestehender Systeme ermöglicht.

Die Aufgabe wird durch einen Mähbalken insbesondere einer landwirtschaftlichen Erntemaschine gelöst, wobei der Mähbalken einen Fingerbalken, eine Mähfingeranordnung und eine Befestigungsanordnung mit einem Spannbolzen umfasst. Die Mähfingeranordnung weist einen Befestigungsabschnitt auf, mit dem die Mähfingeranordnung am Fingerbalken befestigt ist, wobei im Befestigungsabschnitt ein zu einer Stirnseite des Befestigungsabschnitts offener Befestigungsschlitz ausgebildet ist. Der Spannbolzen verläuft durch den Befestigungsschlitz des Befestigungsabschnitts hindurch, wobei der Befestigungsabschnitt und die Befestigungsanordnung mittels des Spannbolzens am Fingerbalken befestigt ist. Der Befestigungsabschnitt der Mähfingeranordnung und die Befestigungsanordnung weisen Formschlusselemente auf, die miteinander in Eingriff sind.

Dadurch, dass die Formschlusselemente zwischen der Mähfingeranordnung einerseits und der Befestigungsanordnung andererseits wirksam sind, muss bei einer Verwendung der Mähfingeranordnung mit Befestigungsschlitz der Fingerbalken nicht besonders ausgebildet sein. Somit lassen sich herkömmliche Mähbalken einfach umrüsten. Mähfingeranordnungen mit Bohrungen zur Befestigung, bei denen Befestigungsschrauben zur Montage und Demontage vollständig entfernt werden müssen, können einfach durch Mähfingeranordnungen mit Befestigungsschlitzen und Befestigungsanordnungen ersetzt werden, ohne dass der Fingerbalken angepasst werden müsste.

Die Mähfingeranordnung kann in einer Montagerichtung auf den Fingerbalken aufgeschoben werden, wobei der Befestigungsschlitz sich in Montagerichtung bis zur Stirnseite des Befestigungsabschnitts erstreckt und den Befestigungsabschnitt in Richtung einer Längsachse des Spannbolzens vollständig durchdringt. Der Befestigungsschlitz wird quer zur Längsachse des Spannbolzens in Montagerichtung aufgeschoben, bis der Spannbolzen durch den Befestigungsschlitz des Befestigungsabschnitts hindurchverläuft. Daraufhin wird der Befestigungsabschnitt und die Befestigungsanordnung mittels des Spannbolzens am Fingerbalken verspannt.

Die Formschlusselemente können beispielsweise eine Kombination aus einer Ausnehmung und einem Vorsprung sein, die parallel zu einer Längsachse des Spannbolzens gegenüberliegend zueinander angeordnet sind. Der Vorsprung greift im verspannten bzw. montierten Zustand in Richtung der Längsachse und damit quer zur Montagerichtung der Mähfingeranordnung in den Vorsprung ein. Somit sichern die Formschlusselemente die Mähfingeranordnung formschlüssig, zusätzlich zur kraftschlüssigen Verspannungswirkung durch den Spannbolzen, gegen ein Abziehen vom Fingerbalken entgegen der Montagerichtung.

Alternativ können die Formschlusselemente auch eine Kombination aus einer Kante der Befestigungsanordnung und einem Vorsprung der Mähfingeranordnung sein, wobei der Vorsprung der Mähfingeranordnung die Kante der Befestigungsanordnung hintergreift. Hierbei ergibt sich eine Überlappung des Vorsprungs mit der Befestigungsanordnung entgegen der Montagerichtung der Mähfingeranordnung betrachtet. Auch hierdurch sichern die Formschlusselemente die Mähfingeranordnung formschlüssig, zusätzlich zur kraftschlüssigen Verspannungswirkung durch den Spannbolzen, gegen ein Abziehen vom Fingerbalken entgegen der Montagerichtung.

Gemäß einer beispielhaften Ausführungsform weist die Befestigungsanordnung einen Bügel auf, über den der Befestigungsabschnitt der Mähfingeranordnung mittels des Spannbolzens gegen den Fingerbalken zumindest mittelbar, also unmittelbar oder mittelbar, verspannt ist. Die Formschlusselemente können am Bügel angeordnet bzw. in diese eingearbeitet sein. Um die Formschlusselemente der Mähfingeranordnung und des Bügels in und außer Eingriff zu bringen, kann der Bügel parallel zur Längsachse des Spannbolzens bzw. quer zur Montagerichtung verlagerbar und/oder elastisch ausgebildet sein.

Der Befestigungsabschnitt kann mittelbar oder unmittelbar zwischen dem Bügel und dem Fingerbalken eingespannt sein. Bei einem mittelbaren Verspannen am Fingerbalken kann sich zum Beispiel zwischen dem Befestigungsabschnitt der Mähfingeranordnung und dem Fingerbalken eine Führungsplatte zum Führen des Mähmessers angeordnet sein.

Zwischen dem Bügel und dem Fingerbalken kann eine Aufnahme gebildet sein, in die der Befestigungsabschnitt der Mähfingeranordnung aufgenommen ist. Die Aufnahme ist zwischen dem Bügel und dem Fingerbalken angeordnet, wobei sich zwischen der Aufnahme und dem Bügel und/oder zwischen der Aufnahme und dem Fingerbalken weitere Bauteile bzw. Elemente befinden können. Zum Beispiel kann die Aufnahme in Richtung zum Fingerbalken durch eine Führungsplatte zum Führen des Mähmessers begrenzt sein oder durch eine Grundplatte der Befestigungsanordnung. Vorzugsweise sind Mittel vorgesehen, die den Bügel in einem Mindestabstand zum Fingerbalken halten, damit die Aufnahme auch bei aus dieser entferntem Befestigungsabschnitt der Mähfingeranordnung offen bleibt, so dass der Befestigungsabschnitt der Mähfingeranordnung ungehindert und ohne vorherige Verlagerung oder Justierung des Bügels in die Aufnahme eingeschoben werden kann.

Der Bügel kann einen Halteabschnitt aufweisen, wobei die Aufnahme zwischen dem Halteabschnitt und dem Fingerbalken angeordnet ist.

Hierbei kann der Bügel seitlich von der Aufnahme einen Stützabschnitt aufweisen, der ohne Zwischenschaltung des Befestigungsabschnitts der Mähfingeranordnung gegen den Fingerbalken abgestützt ist. Der Stützabschnitt kann in einem geringeren Abstand zum Fingerbalken gehalten sein als der Halteabschnitt.

Der Spannbolzen verläuft durch einen Durchbruch, z.B. eine Bohrung, im Bügeln und durch einen Durchbruch, z.B. eine Bohrung, im Fingerbalken hindurch und ist auf voneinander abgewandten Seiten des Fingerbalkens abstützt.

Der Bügel kann auf einer vertikal oberen oder unteren Seite des Fingerbalkens angeordnet sein.

Gemäß einem Ausführungsbeispiel kann die Mähfingeranordnung zusätzlich zum besagten Befestigungsabschnitt einen weiteren Befestigungsabschnitt aufweisen, wobei im weiteren Befestigungsabschnitt ein zu einer Stirnseite des weiteren Befestigungsabschnitts offener Befestigungsschlitze ausgebildet ist. Die Befestigungsanordnung umfasst hierbei zwei Spannbolzen, die jeweils durch einen der Befestigungsschlitze der beiden Befestigungsabschnitte hindurchverlaufen. Die Spannbolzen verlaufen jeweils durch einen Durchbruch, z.B. eine Bohrung, im Bügeln und durch einen Durchbruch, z.B. eine Bohrung, im Fingerbalken hindurch und sind jeweils auf voneinander abgewandten Seiten des Fingerbalkens abgestützt.

Gemäß einem Ausführungsbeispiel kann die Mähfingeranordnung einen Fixierabschnitt aufweisen, wobei der Befestigungsabschnitt und der Fixierabschnitt auf unterschiedlichen Seiten des Fingerbalkens angeordnet sind und mittels eines gemeinsamen Spannbolzens am Fingerbalken befestigt sind. Der Spannbolzen verläuft durch den Befestigungsschlitz des Befestigungsabschnitts und durch den Befestigungsschlitz des Fixierabschnitts hindurch.

Der Spannbolzen kann eine Schraube sein, die über einen Schraubenkopf auf einer Seite des Fingerbalkens axial abgestützt ist und auf einer gegenüberliegenden Seite des Fingerbalkens über eine Schraubenmutter gegen den Fingerbalken abgestützt ist.

Die Schraube kann in einem der Befestigungsschlitze gegen Drehen um eine Längsachse der Schraube abgestützt ist. Somit kann die Schraubenmutter auf einer Seite des Fingerbalkens festgeschraubt werden, ohne die Schraube mit einem zusätzlichen Werkzeug gegen Drehen zu sichern. Hierzu kann die Schraube in einem axialen Abschnitt, mit dem sie im Befestigungsschlitz sitzt, als Vierkantprofil ausgebildet sein, wobei der Befestigungsschlitz dazu kompatibel ausgebildet ist. Das vierkantförmige Profil der Schraube stützt sich somit gegen Wandungen des Befestigungsschlitzes ab.

Bevorzugte Ausführungsbeispiele werden im Folgenden anhand der Zeichnungen näher erläutert. Hierin zeigen:
- Figur 1: eine perspektivische Ansicht einer ersten Ausführungsform eines Mähbalkens,
- Figur 2: einen Querschnitt in Montagerichtung betrachtet durch eine Befestigungsanordnung gemäß Figur 1,
- Figur 3: einen Längsschnitt durch eine Mähfingeranordnung und eine Befestigungsanordnung gemäß Figur 1,
- Figur 4: eine perspektivische Darstellung einer zweiten Ausführungsform eines Mähbalkens,
- Figur 5: einen Querschnitt in Montagerichtung betrachtet durch eine Befestigungsanordnung gemäß Figur 4,
- Figur 6: einen Längsschnitt durch eine Mähfingeranordnung und eine Befestigungsanordnung gemäß Figur 4,
- Figur 7: eine perspektivische Darstellung einer zweiten Ausführungsform eines Mähbalkens,
- Figur 8: einen Querschnitt in Montagerichtung betrachtet durch eine Befestigungsanordnung gemäß Figur 7,
- Figur 9: einen Längsschnitt durch eine Mähfingeranordnung und eine Befestigungsanordnung gemäß Figur 7,
- Figur 10: eine perspektivische Darstellung einer zweiten Ausführungsform eines Mähbalkens,
- Figur 11: einen Querschnitt in Montagerichtung betrachtet durch eine Befestigungsanordnung gemäß Figur 10,
- Figur 12: einen Längsschnitt durch eine Mähfingeranordnung und eine Befestigungsanordnung gemäß Figur 10.

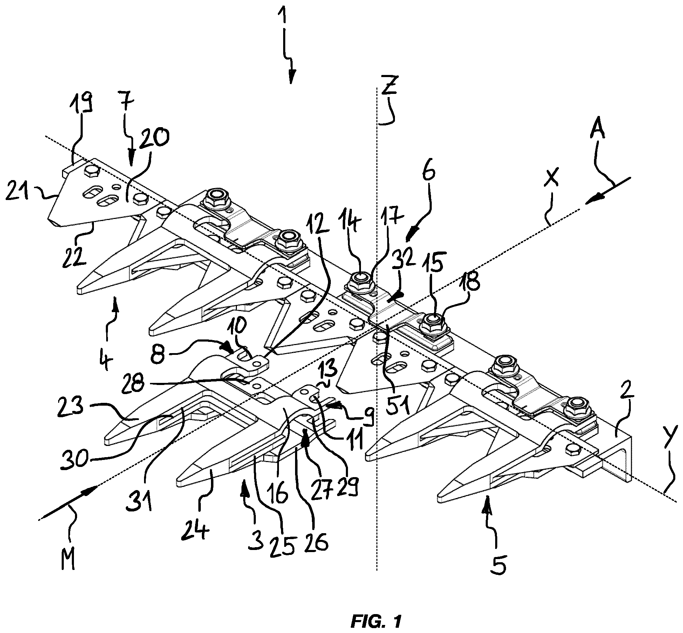

Figur 1 zeigt eine perspektivische Darstellung einer ersten Ausführungsform eines Mähbalkens 1 für eine landwirtschaftliche Erntemaschine mit einer Arbeitsrichtung A in Richtung einer Längsachse X, in der die landwirtschaftliche Erntemaschine und damit der Mähbalken 1 bewegt wird. Der Mähbalken 1 weist eine Haupterstreckungsrichtung quer zur Längsachse X in Richtung einer Querachse Y auf. Die Längsachse X und die Querachse Y sind senkrecht zu einer Hochachse Z angeordnet und bilden zusammen ein kartesisches Koordinatensystem.

Der Mähbalken 1 umfasst einen Fingerbalken 2, der im vorliegenden Ausführungsbeispiel als L-Profil aus Stahl gestaltet ist. Der Fingerbalken 2 kann auch andere Profilformen aufweisen und aus einem anderen Material hergestellt sein. An dem Fingerbalken 2 sind eine Vielzahl von Mähfingeranordnungen 3, 4, 5 befestigt, wobei in der gezeigten Darstellung einer der Mähfingeranordnungen 3 in einem demontierten Zustand dargestellt ist und die anderen beiden dargestellten Mähfingeranordnungen 4, 5 in einem montierten Zustand. Da in dem gezeigten Ausführungsbeispiel alle Mähfingeranordnungen 3, 4, 5 identisch ausgebildet sind, wird im Folgenden der Einfachheit halber repräsentativ für alle Mähfingeranordnungen 3, 4, 5 der demontierte Mähfingeranordnungen 3 im Detail beschrieben.

Die Mähfingeranordnung 3 lässt sich in einer Montagerichtung M, die parallel zur Längsachse X und entgegen der Arbeitsrichtung A ausgerichtet ist, auf den Fingerbalken 2 aufschieben und mittels einer Befestigungsanordnung 6 am Fingerbalken 2 befestigen. Im montierten Zustand aller Mähfingeranordnungen 3, 4, 5 dienen diese zum Führen eines Mähmessers 7 und zum schneidenden Zusammenwirken mit dem Mähmesser 7. Das Mähmesser 7 ist entlang der Querachse Y oszillierend, d. h. hin- und herbewegt, angetrieben ist. Für die Befestigung der Mähfingeranordnung 3 weist diese einen ersten Befestigungsabschnitt 8 und einen zweiten Befestigungsabschnitt 9 auf. Grundsätzlich ist jedoch auch ein einziger Befestigungsabschnitt oder mehr als zwei Befestigungsabschnitte denkbar. Die Befestigungsabschnitte 8, 9 sind in einem Oberteil 16 der aus Blech gefertigten Mähfingeranordnung 3 ausgebildet.

In dem ersten Befestigungsabschnitt 8 ist ein erster Befestigungsschlitz 10 eingebracht, der von einer ersten Stirnseite 12 ausgeht, wobei die erste Stirnseite 12, in Arbeitsrichtung A betrachtet, hinten an der Mähfingeranordnung 3 angeordnet ist. Der erste Befestigungsschlitz verläuft parallel zur Längsachse X und durchdringt den ersten Befestigungsabschnitt 8 vollständig in Richtung der Hochachse Z. Der zweite Befestigungsabschnitt 9 weist vergleichbar zum ersten Befestigungsabschnitt 8 einen zweiten Befestigungsschlitz 11 auf, der von einer zweiten Stirnseite 13 ausgeht, wobei die zweite Stirnseite 13 ebenfalls bezogen auf die Arbeitsrichtung A an einer hinteren Seite der Mähfingeranordnung 3 angeordnet ist. Der zweite Befestigungsschlitz 11 verläuft ebenfalls parallel zur Längsachse X und durchdringt den zweiten Befestigungsabschnitt 9 vollständig in Richtung der Hochachse Z.

Die Befestigungsanordnung 6 weist einen Spannbolzen in Form einer ersten Schraube 14 und einen weiteren Spannbolzen in Form einer zweiten Schraube 15 auf. Zur Montage der Mähfingeranordnung 3 wird diese in Montagerichtung M mit den Befestigungsschlitzen 10, 11 auf die Schrauben 14, 15 aufgesteckt, bis die Schrauben 14, 15 jeweils innerhalb eines der Befestigungsschlitze 10, 11 angeordnet sind. Die Schrauben 14, 15 sind hierbei parallel zu Hochachse Z ausgerichtet, sodass die Befestigungsabschnitte 8, 9 radial zu den Schrauben 14, 15 auf diese aufgesteckt werden. Mittels einer ersten Schraubenmutter 17, die auf die erste Schraube 14 aufgeschraubt ist, und mit einer zweiten Schraubenmutter 18, die auf die zweiten Schraube 15 aufgeschraubt ist, werden die Befestigungsabschnitte 8, 9 gegen den Fingerbalken 2 verspannt.

Das Mähmesser 7 weist einen Messerrücken 19 auf, der im gezeigten Ausführungsbeispiel durch einen Flachstahl gebildet ist und sich in Richtung der Querachse Y erstreckt. Der Messerrücken 19 kann auch aus einem anderen Element als einem Flachstahl hergestellt sein, wie zum Beispiel einem beliebigen Längsprofil. In Richtung der Querachse Y sind eine Mehrzahl von Messerklingen 20 am Messerrücken 19 in Querrichtung Y nebeneinander befestigt. Jede Messerklinge 20 läuft in Arbeitsrichtung A nach vorne spitz zu und bildet zwei seitliche Schneiden 21, 22. Diese wirken schneidend mit den Mähfingeranordnungen 3, 4, 5 zusammen. Die Mähfingeranordnungen 3, 4, 5 sind als Doppelfinger ausgebildet und weisen jeweils zwei in Arbeitsrichtung nach vorne weisende Finger 23, 24 auf. Grundsätzlich ist es auch denkbar, dass nur ein Finger oder mehr als zwei Finger vorhanden sind. Die Finger 23, 24 sind durch das Oberteil 18, ein Mittelteil 25 sowie ein Unterteil 26 gebildet, die jeweils aus Blech gefertigt sind und miteinander verschweißt, verklebt oder anderweitig durch bekannte Fügeverfahren verbunden sind. Das Oberteil 16 und das Mittelteil 25 bilden hierbei Gegenschneiden 30, 31 für die Messerklingen 20. An zwei voneinander abgewandten Seiten der Finger 23, 24 sind jeweils zwei Gegenschneiden 30, 31 gebildet, wobei eine der Gegenschneiden 30 am Mittelteil 25 und die andere Gegenschneide 31 am Oberteil 16 angeordnet ist. Die Schneiden 21, 22 sind jeweils durch einen schrägen Anschliff der jeweiligen Messerklinge 20 gebildet. Die Messerklingen 20 sind in Richtung der Querachse Y im Wechsel derart montiert, dass sich eine Messerklinge 20 mit den Schneiden 21, 22 an einer in Richtung der Hochachse Z unteren Seite mit einer Messerklinge 20 mit den Schneiden 21, 22 an einer in Richtung der Hochachse Z oberen Seite abwechseln. Die Messerklingen 20 mit den Schneiden 21, 22 an der unteren Seite wirken mit den Gegenschneiden 30 an den Mittelteilen 25 der Mähfingeranordnungen 3, 4, 5 zusammen. Die Messerklingen 20 mit den Schneiden 21, 22 an der oberen Seite wirken mit den Gegenschneiden 31 am Oberteil 18 der Mähfingeranordnungen 3, 4, 5 zusammen.

Am Unterteil 26 ist ein in Arbeitsrichtung A betrachtet nach hinten weisender Fixierabschnitt 27 angeordnet, der einen dritten Befestigungsschlitz 28 und einen vierten Befestigungsschlitz 29 aufweist, die ebenfalls nach hinten offen sind. Der dritte Befestigungsschlitz 28 ist in Richtung der Hochachse Z betrachtet in Überdeckung mit dem ersten Befestigungsschlitz 10 des ersten Befestigungsabschnitts 8 angeordnet. Der vierte Befestigungsschlitz 29 ist in Richtung der Hochachse Z betrachtet in Überdeckung zum zweiten Befestigungsschlitz 11 des zweiten Befestigungsabschnitts 9 angeordnet. Der dritte Befestigungsschlitz 28 und der vierte Befestigungsschlitz 29 verlaufen jeweils parallel zur Längsachse X und durchdringen den Fixierabschnitt 27 vollständig in Richtung der Hochachse Z. Somit lässt sich die Mähfingeranordnung 3 derart auf die erste Schraube 14 und die zweite Schraube 15 aufstecken, dass die erste Schraube 14 sowohl den ersten Befestigungsschlitz 10 als auch den dritten Befestigungsschlitz 28 durchdringt und die zweite Schraube 15 sowohl den ersten Befestigungsschlitz 11 als auch den vierten Befestigungsschlitz 29 durchdringt. Im montierten Zustand befindet sich der Fixierabschnitt 27 auf einer von den beiden Befestigungsabschnitten 8, 9 abgewandten Seite des Fingerbalkens 2.

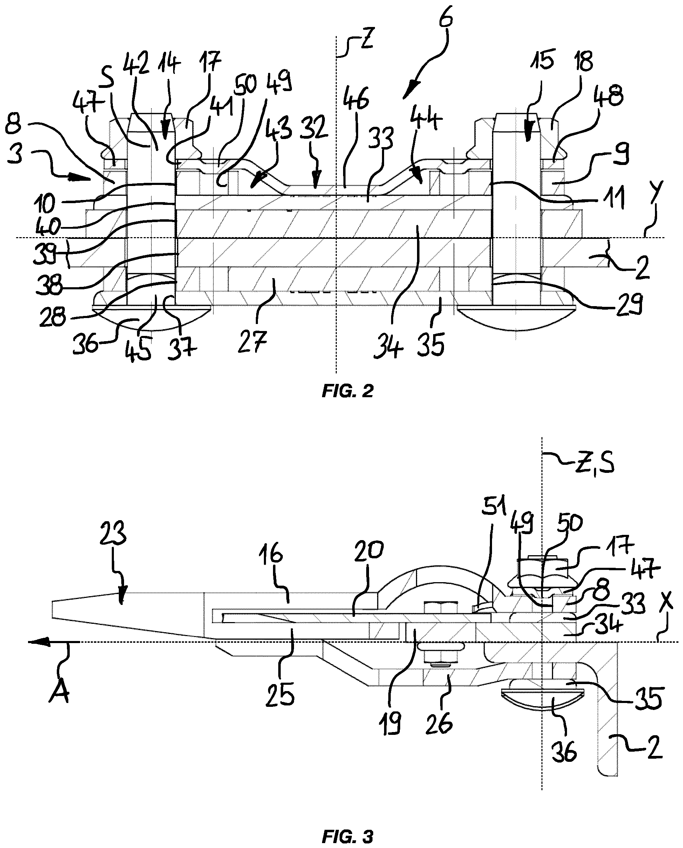

Figur 2 zeigt einen Längsschnitt durch die Befestigungsanordnung 6 gemäß Figur 1 mit montierter Mähfingeranordnung 3 in Montagerichtung M, wobei die Schnittebene von der Querachse Y und der Hochachse Z aufgespannt ist.

Die Befestigungsanordnung 6 umfasst einen Bügel 32 sowie eine Grundplatte 33. Die Befestigungsabschnitte 8, 9 der Mähfingeranordnung 3 sind zwischen dem Bügel 32 und der Grundplatte 33 angeordnet und zwischen diesen verspannt. Die Grundplatte 33 ist über eine Führungsplatte 34 gegen den Fingerbalken 2 abgestützt bzw. verspannt. Die Führungsplatte 34 dient zum Führen des Mähmessers 7, wie noch nachfolgend erläutert wird. Auf einer vom Bügel 32 abgewandten Seite des Fingerbalkens 2 ist in Anlage zum Fingerbalken 2 der Fixierabschnitt 27 der Mähfingeranordnung 3 angeordnet, gegen den wiederum eine Zwischenplatte 35 anliegt. Die Zwischenplatte 35 kann auch Bestandteil eines Gleitschuhs bzw. "Skid Shoes" (nicht dargestellt) sein, über den der Mähbalken gegen den Boden gleitend abgestützt ist. Die beiden Schrauben 14, 15 sind identisch aufgebaut und jeweils bezogen auf die Befestigungsabschnitte 8, 9 identisch angeordnet, sodass im Folgenden repräsentativ für beide Schrauben 14, 15 die erste Schraube 14 und deren Befestigung erläutert wird.

Die erste Schraube 14 weist einen Schraubenkopf 36 auf, der axial in Richtung einer Längsachse S der ersten Schraube 14 auf einer vom Fingerbalken 2 abgewandten Seite gegen die Zwischenplatte 35 axial abgestützt ist. Die erste Schraube 14 weist einen Schraubenschaft 42 auf, der sich entlang der Längsachse S erstreckt. Der Schraubenschaft 42 ist durch eine Durchbruch 37 in der Zwischenplatte 35, durch den dritten Befestigungsschlitz 28 des Fixierabschnitts 27 der Mähfingeranordnung 3, durch einen Durchbruch in Form einer Bohrung 38 des Fingerbalkens 2, durch einen Durchbruch in Form einer Bohrung 39 der Führungsplatte 34, durch einen Durchbruch in Form einer Bohrung 40 der Grundplatte 33, durch den ersten Befestigungsschlitz 10 des ersten Befestigungsabschnitts 8 und durch einen Durchbruch in Form einer Bohrung 41 im Bügel 32 hindurchgeführt. Auf das freie Ende des Schraubenschaft 42 ist die erste Schraubenmutter 17 aufgeschraubt und verspannt einerseits den ersten Befestigungsabschnitt 8 mittelbar über die Grundplatte 33 und die Führungsplatte 34 gegen den Fingerbalken 2 sowie den Fixierabschnitt 27 gegen den Fingerbalken 2 auf einer vom Bügel 32 abgewandten Seite des Fingerbalkens 2.

Im Bereich des Schraubenkopfes 36 weist der Schraubenschaft 42 einen Drehsicherungsabschnitt 45 mit einem unrunden, insbesondere quadratischen Querschnitt (Vierkantquerschnitt) auf. Dieser Drehsicherungsabschnitt 45 stützt sich gegen Flanken des dritten Befestigungsschlitzes 28 derart ab, dass die erste Schraube 14 gegen Drehungen um die Längsachse S der ersten Schraube 14 gesichert ist. Somit kann die erste Schraubenmutter 17 auf den Schraubenschaft 42 aufgeschraubt werden, ohne die erste Schraube 14 separat gegen Verdrehung sichern zu müssen. Darüber hinaus weist der Durchbruch 37 der Zwischenplatte 35 ebenfalls ein zum Vierkantquerschnitt des Drehsicherung Abschnitts 45 komplementären Querschnitt auf. Die Schraube 14 ist somit auch gegenüber der Zwischenplatte 35 drehsicher gehalten. Hierdurch ist sichergestellt, dass die Schraube 14 stets eine Drehposition aufweist, die ein Aufschieben des Befestigungsabschnitts 8 und damit des Befestigungsschlitzes 10 auf die Schraube 14 in radialer Richtung zum Schraubenschaft 42 ermöglicht.

Der Bügel 32 weist einen zentralen Stützabschnitt 46 auf, der unmittelbar gegen die Grundplatte 33 in Anlage gehalten und abgestützt ist. Ausgehend vom zentralen Stützabschnitt 46 erstreckt sich in Richtung zur ersten Schraube 14 ein erster Halteabschnitt 47 und in Richtung zur zweiten Schraube 15 ein zweiter Halteabschnitt 48. In den Halteabschnitten 47, 48 sind die Bohrungen 41 für die Schrauben 14, 15 angeordnet. Die Halteabschnitte 47, 48 sind in einem axialen Abstand bezogen auf die Hochachse Z zur Grundplatte 33 angeordnet, sodass zwischen dem ersten Halteabschnitt 47 und der Grundplatte 33 eine erste Aufnahme 43 und zwischen dem zweiten Halteabschnitt 48 und der Grundplatte 33 eine zweite Aufnahme 44 gebildet ist. In die erste Aufnahme 43 ist der ersten Befestigungsabschnitt 8 eingeschoben. In die zweite Aufnahme 44 ist der zweite Befestigungsabschnitt 9 eingeschoben. Der Stützabschnitt 46 ist in Richtung der Querachse Y seitlich versetzt zu den Aufnahmen 43, 44 angeordnet.

Im ersten Befestigungsabschnitt 8 befindet sich eine Ausnehmung 49 in Form einer Bohrung parallel zur Hochachse Z. Im ersten Halteabschnitt 47 des Bügels 32 befindet sich ein Vorsprung 50 in Richtung zur Ausnehmung 49, der durch eine Einprägung im ersten Halteabschnitt 47 ausgebildet ist. Der Vorsprung 50 taucht in die Ausnehmung 49 ein, sodass die Ausnehmung 49 und der Vorsprung 50 Formschlusselemente bilden, die miteinander in Eingriff sind. Analog hierzu sind gleiche Formschlusselemente im zweiten Halteabschnitt 48 und im zweiten Befestigungsabschnitte 9 angeordnet.

Figur 3 zeigt einen Längsschnitt durch die Mähfingeranordnung 3 gemäß Figur 1, im montierten Zustand, wobei die Schnittebene durch die Formschlusselemente verläuft und durch die Längsachse X und die Hochachse Z aufgespannt ist.

Es ist zu erkennen, dass der Messerrücken 19 des Mähmessers 7 in Arbeitsrichtung A betrachtet nach hinten gegen die Führungsplatte 34 abgestützt ist. Die Messerklingen 20 stehen nach hinten über den Messerrücken 19 vor und sind vertikal nach unten gegen die Führungsplatte 34 abgestützt bzw. geführt. Der Bügel 32 weist einen nach vorne über die Messerklingen 20 vorstehenden Niederhalterabschnitt 51 auf, sodass die Messerklingen 20 zwischen der Führungsplatte 34 und dem Niederhalterabschnitt 51 angeordnet und geführt sind.

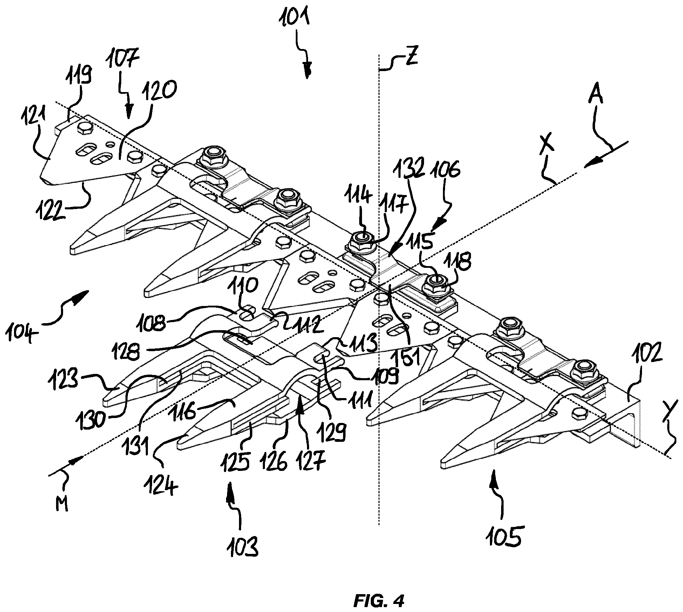

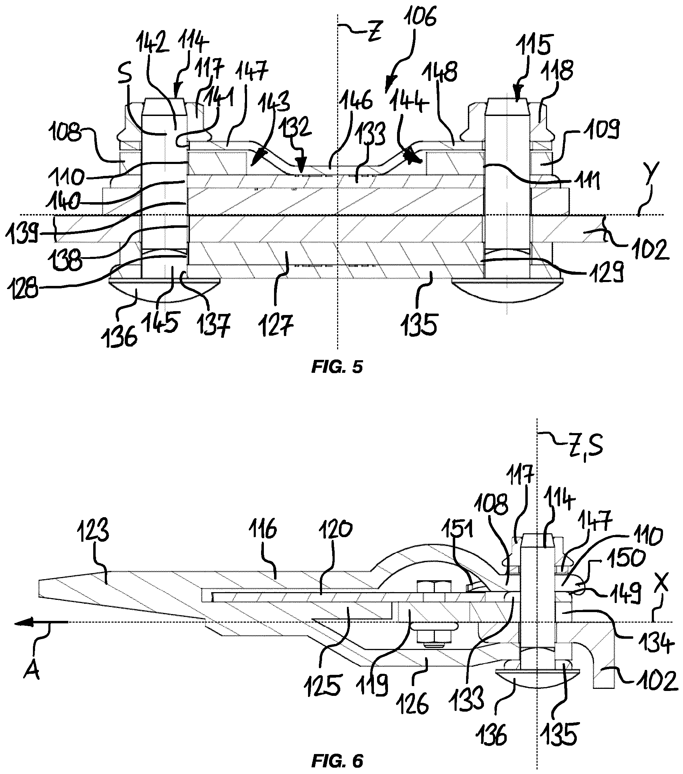

Die Figuren 4 bis 6 zeigen eine zweite Ausführungsform eines Mähbalkens 101 in unterschiedlichen Ansichten, wobei Bauteile und Merkmale, die mit Bauteilen der ersten Ausführungsform übereinstimmen, mit Bezugszeichen versehen sind, die um den Wert 100 erhöht sind und im Zusammenhang mit der ersten Ausführungsform beschrieben sind.

Der Mähbalken 101 gemäß der zweiten Ausführungsform ist in weiten Teilen identisch zum Mähbalken der ersten Ausführungsform, unterscheidet sich jedoch hinsichtlich der Formschlusselemente an den Mähfingeranordnungen 103, 104, 105.

Im Unterschied zur ersten Ausführungsform sind in den beiden Befestigungsabschnitt 108, 109 der Mähfingeranordnung 103 nicht ein Vorsprung und eine Ausnehmung vorhanden. Stattdessen weisen die Befestigungsabschnitte 108, 109, wie anhand des ersten Befestigungsabschnitts 108 im Folgenden für beide Befestigungsabschnitte 108, 109 erläutert wird, jeweils einen Vorsprung 150 in Form einer Wulst auf, der an der hinteren Stirnseite 112 des ersten Befestigungsabschnitts 108 angeordnet ist. Der erste Befestigungsabschnitt 108 steht mit dem Vorsprung 150 in Arbeitsrichtung A betrachtet nach hinten über das Zwischenblech 133 vor und hintergreift eine Kante 149 des Zwischenblechs 133 in Richtung der Hochachse Z. Bei Kräften, die auf die Mähfingeranordnung 130 entgegen der Montagerichtung einwirken, stößt somit der Vorsprung 150 in Form eines Wulstes gegen die Kante 149 des Zwischenblechs 133 und bietet somit einen Formschluss.

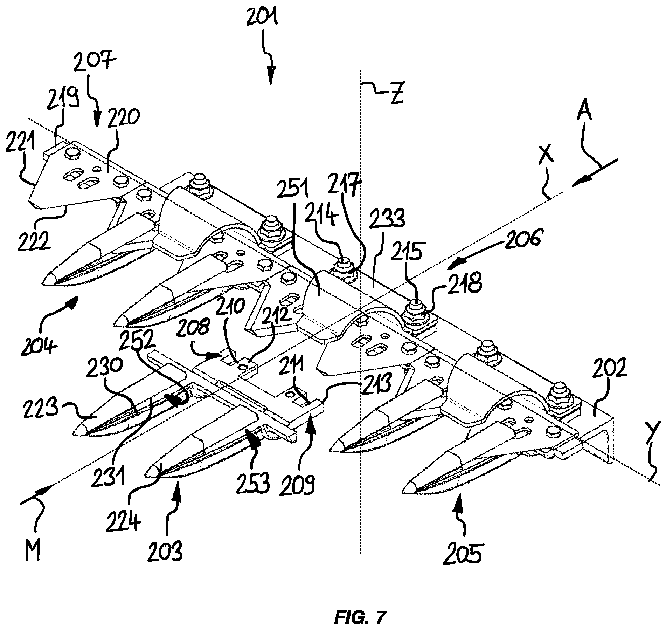

Die Figuren 7 bis 9 zeigen eine dritte Ausführungsform eines Mähbalkens 201 in unterschiedlichen Ansichten, wobei Bauteile und Merkmale, die mit Bauteilen der ersten Ausführungsform übereinstimmen, mit Bezugszeichen versehen sind, die um den Wert 200 erhöht sind, und im Zusammenhang mit der ersten Ausführungsform beschrieben sind.

Der Mähbalken 201 gemäß der dritten Ausführungsform ist in weiten Teilen identisch zum Mähbalken der ersten Ausführungsform unterscheidet sich jedoch hinsichtlich der Mähfingeranordnungen 203, 204, 205. Die Mähfingeranordnungen 203, 204, 205 sind nicht wie bei den beiden ersten Ausführungsformen als Blechfinger mit miteinander verbundenem, insbesondere verschweißtem Oberteil, Mittelteil und Unterteil aus Blech gefertigt, sondern als Schmiede- oder Gussteile ausgebildet.

Die Mähfingeranordnungen 203, 204, 205 werden im Folgenden anhand der demontierten Mähfingeranordnung 203 beschrieben. Die Mähfingeranordnung 203 ist lediglich über den ersten Befestigungsabschnitt 208 und den zweiten Befestigungsabschnitt 209 am Fingerbalken 202 befestigt. Die beiden Befestigungsabschnitte 208, 209 sind hierbei nicht, wie bei den ersten beiden Ausführungsformen in Richtung der Hochachse Z oberhalb des Fingerbalkens 202 angeordnet, sondern vertikal darunter. Die Mähfingeranordnung 203 weist keinen Fixierabschnitt wie die ersten beiden Ausführungsformen auf.

Die Finger 223, 224 der Mähfingeranordnung 203 bilden jeweils einen in Arbeitsrichtung A betrachtet hinten offenen Führungsschlitz 252, 253. Die Führungsschlitze 252, 253 dienen zum Führen der Messerklingen 220 und bilden zudem die Gegenschneiden 230, 231.

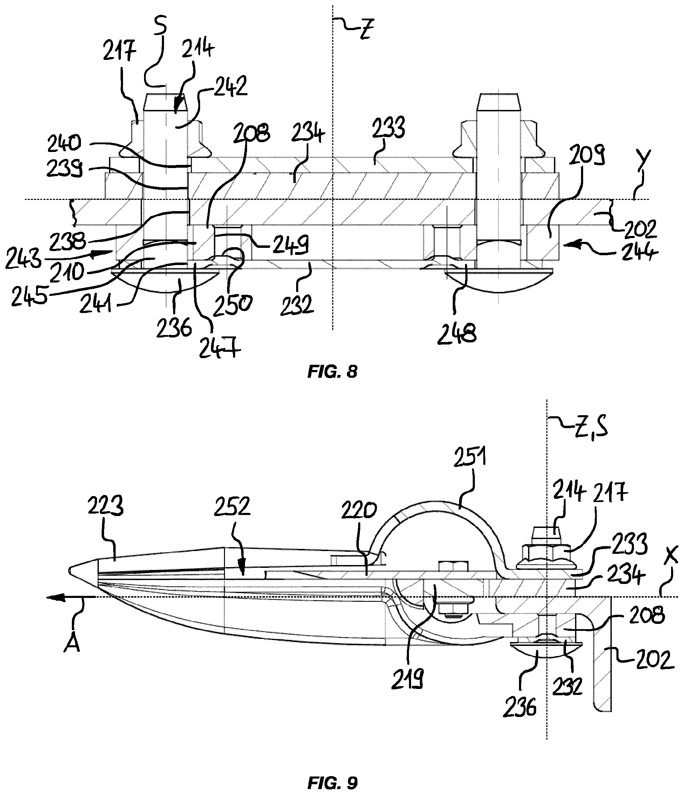

Wie in Figur 8 zu erkennen ist, befindet sich der erste Befestigungsabschnitt 208 zwischen dem ebenfalls vertikal unterhalb des Fingerbalkens 202 angeordneten Bügel 232 und dem Fingerbalken 202. Auf der gegenüberliegenden Seite des Fingerbalkens 202 sind die Führungsplatte 234 sowie die Grundplatte 233 angeordnet und gegen den Fingerbalken 202 verspannt.

Die Formschlusselemente entsprechen denen der ersten Ausführungsform mit einem Vorsprung 250 in Form einer Einprägung im Bügel 232 und eine Ausnehmung 249 in Form einer Durchgangsbohrung im ersten Befestigungsabschnitt 208. Die Befestigung über die zweite Schraube 215 ist identisch aufgebaut.

Wie in Figur 8 ersichtlich, ist an der Grundplatte 233 ein Niederhalter 216 angeformt, der bogenförmig gestaltet ist und mit einem freien Ende eine mögliche Bewegung der Messerklingen 220 nach vertikal oben in Richtung der Hochachse Z begrenzt.

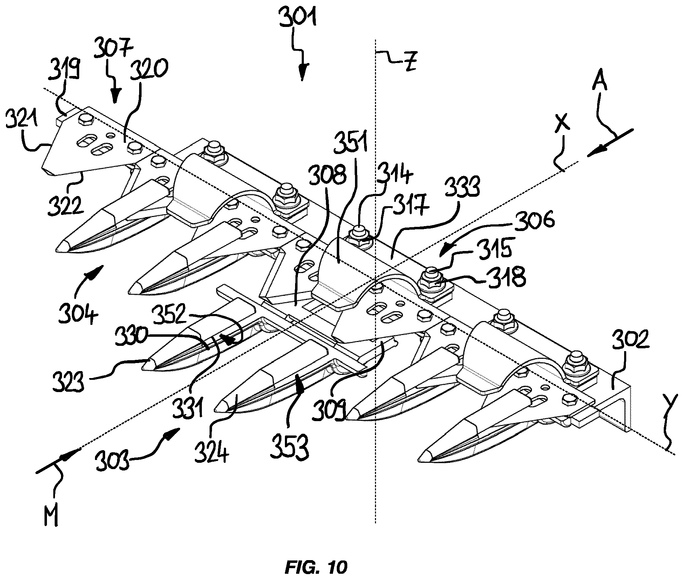

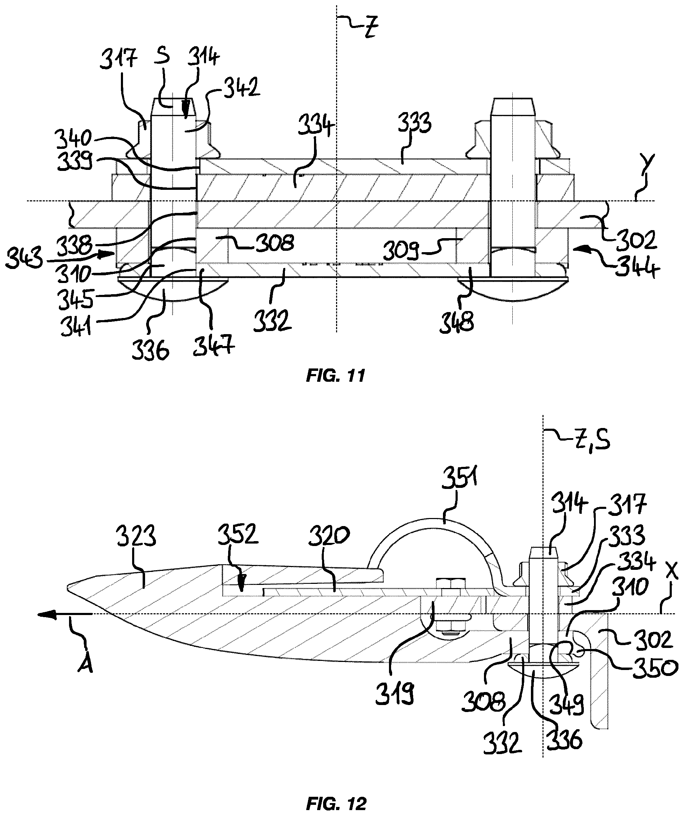

Die Figuren 10 bis 12 zeigen eine vierte Ausführungsform eines Mähbalkens in unterschiedlichen Ansichten, wobei Bauteile und Merkmale, die mit Bauteilen der ersten Ausführungsform übereinstimmen, mit Bezugszeichen versehen sind, die um den Wert 300 erhöht sind, und im Zusammenhang mit der ersten Ausführungsform beschrieben sind.

Der Mähbalken 301 gemäß der vierten Ausführungsform ist in weiten Teilen identisch zum Mähbalken der dritte Ausführungsform, unterscheidet sich jedoch hinsichtlich der Formschlusselemente an den Mähfingeranordnungen 303, 304, 305.

Im Unterschied zur dritten Ausführungsform sind in den beiden Befestigungsabschnitt 308, 309 der Mähfingeranordnung 303 nicht ein Vorsprung und eine Ausnehmung vorhanden. Stattdessen weisen die Befestigungsabschnitte 308, 309, vergleichbar zur zweiten Ausführungsform, wie anhand des ersten Befestigungsabschnitts 308 im Folgenden für beide Befestigungsabschnitte 308, 309 erläutert, jeweils einen Vorsprung 350 in Form einer Wulst auf, der an der hinteren Stirnseite 312 des ersten Befestigungsabschnitts 308 angeordnet ist. Der erste Befestigungsabschnitt 308 steht mit dem Vorsprung 350 in Arbeitsrichtung A betrachtet nach hinten über den Bügel 332 vor und hintergreift eine Kante 349 des Bügels 332 in Richtung der Hochachse Z. Bei Kräften, die auf die Mähfingeranordnung 303 entgegen der Montagerichtung M einwirken, stößt somit der Vorsprung 350 in Form eines Wulstes gegen die Kante 349 des Bügels 332 und bietet einen Formschluss.

### Bezugszeichenliste

- 1, 101, 201, 301: Mähbalken
- 2, 102, 202, 302: Fingerbalken
- 3, 103, 203, 303: Mähfingeranordnung
- 4, 104, 204, 304: Mähfingeranordnung
- 5, 105, 205, 305: Mähfingeranordnung
- 6, 106, 206, 306: Befestigungsanordnung
- 7, 107, 207, 307: Mähmesser
- 8, 108, 208, 308: erster Befestigungsabschnitt
- 9, 109, 209, 309: zweiter Befestigungsabschnitt
- 10, 110, 210, 310: erster Befestigungsschlitz
- 11, 111, 211, 311: zweiter Befestigungsschlitz
- 12, 112, 212, 312: erste Stirnseite
- 13, 113, 213, 313: zweite Stirnseite
- 14, 114, 214, 314: erste Schraube (Spannbolzen)
- 15, 115, 215, 315: zweite Schraube (Spannbolzen)
- 16, 116: Oberteil
- 17, 117, 217, 317: erste Schraubenmutter
- 18, 118, 218, 318: zweite Schraubenmutter
- 19, 119, 219, 319: Messerrücken
- 20, 120, 220, 320: Messerklinge
- 21, 121, 221, 321: Schneide
- 22, 122, 222, 322: Schneide
- 23, 123, 223, 323: Finger
- 24, 124, 224, 324: Finger
- 25, 125: Mittelteil
- 26, 126: Unterteil
- 27, 127: Fixierabschnitt
- 28, 128: dritter Befestigungsschlitz
- 29, 129: vierter Befestigungsschlitz
- 30, 130, 230, 330: Gegenschneide
- 31, 131, 231, 331: Gegenschneide
- 32,132,232,332: Bügel
- 33, 133, 233, 333: Grundplatte
- 34, 134, 234, 334: Führungsplatte
- 35, 135, 235, 335: Zwischenplatte
- 36, 136, 236, 336: Schraubenkopf
- 37, 137: Bohrung
- 38, 138, 238, 338: Bohrung
- 39,139,239,329: Bohrung
- 40, 140, 240, 340: Bohrung
- 41, 141, 241, 341: Bohrung
- 42, 142, 242, 342: Schraubenschaft
- 43, 143, 243, 343: erste Aufnahme
- 44, 144, 244, 344: zweite Aufnahme
- 45, 145, 245, 345: Drehsicherungsabschnitt
- 46, 146, 246, 346: Stützabschnitt
- 47, 147, 247, 347: erster Halteabschnitt
- 48, 148, 248, 348: zweiter Halteabschnitt
- 49, 149, 249, 349: Ausnehmung/Kante
- 50, 150, 250, 350: Vorsprung
- 51, 151, 251, 351: Niederhalterabschnitt
- 252: Führungsschlitz
- 253: Führungsschlitz
- 349: Kante
- 352: Führungsschlitz
- 353: Führungsschlitz
- A: Arbeitsrichtung
- M: Montagerichtung
- S: Längsachse der Schraube
- X: Längsachse
- Y: Querachse
- Z: Hochachse

## Patentansprüche

1. Mähbalken (1, 101, 201, 301) umfassend:
einen Fingerbalken (2, 102, 202, 302),
eine Mähfingeranordnung (3, 4, 5, 103, 104, 105, 203, 204, 205, 303, 304, 305), die einen Befestigungsabschnitt (8, 108, 208, 308) aufweist, mit dem die Mähfingeranordnung (3, 4, 5, 103, 104, 105, 203, 204, 205, 303, 304, 305) am Fingerbalken (2, 102, 202, 302) befestigt ist, wobei im Befestigungsabschnitt (8, 108, 208, 308) ein zu einer Stirnseite (12, 112, 212, 312) des Befestigungsabschnitts (8, 108, 208, 308) offener Befestigungsschlitz (10, 110, 210, 310) ausgebildet ist, und
eine Befestigungsanordnung (6, 106, 206, 306) mit einem Spannbolzen (14, 114, 214, 314), wobei der Spannbolzen (14, 114, 214, 314) durch den Befestigungsschlitz (10, 110, 210, 310) des Befestigungsabschnitts (8, 108, 208, 308) hindurchverläuft und der Befestigungsabschnitt (8, 108, 208, 308) und die Befestigungsanordnung (6, 106, 206, 306) mittels des Spannbolzens (14, 114, 214, 314) am Fingerbalken (2, 102, 202, 302) befestigt ist,
**dadurch gekennzeichnet,**
**dass** der Befestigungsabschnitt (8, 108, 208, 308) der Mähfingeranordnung (3, 4, 5, 103, 104, 105, 203, 204, 205, 303, 304, 305) und die Befestigungsanordnung (6, 106, 206, 306) Formschlusselemente (49, 50, 149, 150, 249, 250, 349, 350) aufweisen, die miteinander in Eingriff sind.

2. Mähbalken (1, 201) nach Anspruch 1,
**dadurch gekennzeichnet,**
**dass** die Formschlusselemente eine Kombination aus einer Ausnehmung (49, 249) und einem Vorsprung (50, 250) sind, die parallel zu einer Längsachse (S) des Spannbolzens (14, 214) gegenüberliegend zueinander angeordnet sind.

3. Mähbalken (101, 301) nach Anspruch 1,
**dadurch gekennzeichnet,**
**dass** die Formschlusselemente eine Kombination aus einer Kante (149, 349) der Befestigungsanordnung (106, 306) und einem Vorsprung (150, 350) der Mähfingeranordnung (103, 104, 105, 303, 304, 305) sind, wobei der Vorsprung (150, 350) der Mähfingeranordnung (103, 104, 105, 303, 304, 305) die Kante (149, 349) der Befestigungsanordnung (106, 306) hintergreift.

4. Mähbalken (1, 101, 201, 301) nach einem der Ansprüche 1 bis 3,
**dadurch gekennzeichnet,**
**dass** die Befestigungsanordnung (6, 106, 206, 306) einen Bügel (32, 132, 232, 332) aufweist, über den der Befestigungsabschnitt (8, 108, 208, 308) der Mähfingeranordnung (3, 4, 5, 103, 104, 105, 203, 204, 205, 303, 304, 305) mittels des Spannbolzens (14, 114, 214, 314) gegen den Fingerbalken (2, 102, 202, 302) zumindest mittelbar verspannt ist.

5. Mähbalken (1, 101, 201, 301) nach Anspruch 4,
**dadurch gekennzeichnet,**
**dass** der Bügel (32, 132, 232, 332) parallel zu einer Längsachse (S) des Spannbolzens (14, 114, 214, 314) verlagerbar und/oder elastisch ausgebildet ist.

6. Mähbalken (1, 101, 201, 301) nach Anspruch 4 oder 5,
**dadurch gekennzeichnet,**
**dass** der Befestigungsabschnitt (8, 108, 208, 308) zumindest mittelbar zwischen dem Bügel (32, 132, 232, 332) und dem Fingerbalken (2, 102, 202, 302) eingespannt ist.

7. Mähbalken (1, 101, 201, 301) nach einem der Ansprüche 4 bis 6,
**dadurch gekennzeichnet,**
**dass** zwischen dem Bügel (32, 132, 232, 332) und dem Fingerbalken (2, 102, 202, 302) eine Aufnahme (43, 143, 243, 343) gebildet ist, in die der Befestigungsabschnitt (8, 108, 208, 308) der Mähfingeranordnung (3, 4, 5, 103, 104, 105, 203, 204, 205, 303, 304, 305) aufgenommen ist.

8. Mähbalken (1, 101, 201, 301) nach Anspruch 7,
**dadurch gekennzeichnet,**
**dass** der Bügel (32, 132, 232, 332) einen Halteabschnitt (47, 147, 247, 347) aufweist, wobei die Aufnahme (43, 143, 243, 343) zwischen dem Halteabschnitt (47, 147, 247, 347) und dem Fingerbalken (2, 102, 202, 302) angeordnet ist.

9. Mähbalken (1, 101) nach Anspruch 8,
**dadurch gekennzeichnet,**
**dass** der Bügel (32, 132) seitlich von der Aufnahme (43, 143, 243, 343) einen Stützabschnitt (46, 146) aufweist, der ohne Zwischenschaltung des Befestigungsabschnitts (8, 108) der Mähfingeranordnung (3, 4, 5, 103, 104, 105) zumindest mittelbar gegen den Fingerbalken (2, 102) abgestützt ist.

10. Mähbalken (1, 101, 201, 301) nach einem der Ansprüche 4 bis 9,
**dadurch gekennzeichnet,**
**dass** der Spannbolzen (14, 114, 214, 314) durch einen Durchbruch im Bügeln (32, 132, 232, 332) und durch einen Durchbruch im Fingerbalken (2, 102, 202, 302) hindurchverläuft und auf voneinander abgewandten Seiten des Fingerbalkens (2, 102, 202, 302) abgestützt ist.

11. Mähbalken (1, 101, 201, 301) nach Anspruch 10,
**dadurch gekennzeichnet,**
**dass** die Mähfingeranordnung (3, 4, 5, 103, 104, 105, 203, 204, 205, 303, 304, 305) zusätzlich zum besagten Befestigungsabschnitt (8, 108, 208, 308) einen weiteren Befestigungsabschnitt (9, 109, 209, 309) aufweist,
**dass** im weiteren Befestigungsabschnitt (9, 109, 209, 309) ein zu einer Stirnseite des weiteren Befestigungsabschnitts (9, 109, 209, 309) offener Befestigungsschlitze (11, 111, 211, 311) ausgebildet ist,
**dass** die Befestigungsanordnung (6, 106, 206, 306) zwei Spannbolzen (14, 114, 214, 314; 15, 115, 215, 315) umfasst, die jeweils durch einen der Befestigungsschlitze (10, 110, 210, 310; 11, 111, 211, 311) der beiden Befestigungsabschnitte (8, 9, 108, 109, 208, 209, 308, 309) hindurchverlaufen, und
**dass** die Spannbolzen (14, 114, 214, 314; 15, 115, 215, 315) jeweils durch einen Durchbruch im Bügeln (32, 132, 232, 332) und durch einen Durchbruch im Fingerbalken (2, 102, 202, 302) hindurchverlaufen und jeweils auf voneinander abgewandten Seiten des Fingerbalkens (2, 102, 202, 302) abstützt sind.

12. Mähbalken (1, 101) nach einem der Ansprüche 1 bis 11,
**dadurch gekennzeichnet,**
**dass** die Mähfingeranordnung (3, 4, 5, 103, 104, 105) einen Fixierabschnitt (27, 127) aufweist,
**dass** der Befestigungsabschnitt (8, 108) und der Fixierabschnitt (27, 127) auf unterschiedlichen Seiten des Fingerbalkens (2, 102) angeordnet sind und mittels eines gemeinsamen Spannbolzens (14, 114) am Fingerbalken (2, 102) befestigt sind, und
**dass** der Spannbolzen (14, 114) durch den Befestigungsschlitz (10; 110) des Befestigungsabschnitts (8, 108) und durch den Befestigungsschlitz (28; 128) des Fixierabschnitts (27, 127) hindurchverläuft.

13. Mähbalken (1, 101, 201, 301) nach einem der Ansprüche 1 bis 12,
**dadurch gekennzeichnet,**
**dass** der Spannbolzen eine Schraube (14, 114, 214, 314) ist, die über einen Schraubenkopf (36, 136, 236, 336) auf einer Seite des Fingerbalkens (2, 102, 202, 302) axial abgestützt ist und auf einer gegenüberliegenden Seite des Fingerbalkens (2, 102, 202, 302) über eine Schraubenmutter (17, 117, 217, 317) gegen den Fingerbalken (2, 102, 202, 302) abgestützt ist.

14. Mähbalken (1, 101, 201, 301) nach Anspruch 13,
**dadurch gekennzeichnet,**
**dass** die Schraube (14, 114, 214, 314) in einem der Befestigungsschlitze gegen Drehen um eine Längsachse (S) der Schraube (14, 114, 214, 314) abgestützt ist.

15. Mähbalken (1, 101, 201, 301) nach einem der Ansprüche 1 bis 14,
**dadurch gekennzeichnet,**
**dass** der Befestigungsabschnitt (8, 108, 208, 308) der Mähfingeranordnung (3, 4, 5, 103, 104, 105, 203, 204, 205, 303, 304, 305) mittelbar über eine Führungsplatte (34, 134, 234, 334) zum Führen des Mähmessers (7, 107, 207, 307) gegen den Fingerbalken (2, 102, 202, 302) verspannt ist.
